**Europäisches Patentamt**

**European Patent Office**

**Office européen des brevets**

(11) Veröffentlichungsnummer: **0 270 059 B1**

# (12) EUROPÄISCHE PATENTSCHRIFT

(45) Veröffentlichungstag der Patentschrift: **30.03.94**

(21) Anmeldenummer: **87117696.2**

(22) Anmeldetag: **30.11.87**

(51) Int. Cl.⁵: **G05B 19/415**, G05B 19/18

(54) Numerisches Steuersystem für hochdynamische Prozesse.

(30) Priorität: **01.12.86 DE 3640987**

(43) Veröffentlichungstag der Anmeldung:
**08.06.88 Patentblatt 88/23**

(45) Bekanntmachung des Hinweises auf die Patenterteilung:
**30.03.94 Patentblatt 94/13**

(84) Benannte Vertragsstaaten:
**CH DE FR GB IT LI LU SE**

(56) Entgegenhaltungen:
DE-A- 2 030 711    DE-A- 2 049 898
DE-A- 2 845 953    FR-A- 2 083 638
FR-A- 2 191 766    US-A- 3 731 043
US-A- 3 731 045    US-A- 4 035 706

A.H.Al-ANBUKY: "Microprocessor based wide range interpolator for high performance cnc mac." 22 Oktober 1984, IECON 84, Tokyo,JP, Seiten 539-544

MYOUNG SAM KO: "A high speed linear interpolator for a refence-pulse cnc system",29. September 1986, IECON 86, Milwaukee,WI, US, Seiten 727-732

INDUSTRIEANZEIGER, HGF Kurzberichte der Hochschulgruppe Fertigungstechnik der Technischen Hochschulen und Universitäten der Bundesrepublik Deutschland, HGF 624 84/1, Nr. 1/2 vom 6. Januar 1984; G.GRUHLER und M.KEPPELER: "Automatische Datenreduktion und Auswahl der Interpolationsart bei Roboter-Bewegungsprogrammen", Seiten 25 und 26

(73) Patentinhaber: **AG für industrielle Elektronik AGIE Losone bei Locarno**

**CH-6616 Losone/Locarno(CH)**

(72) Erfinder: **Bühler, Ernst**
**Salita degli Orti**
**CH-6616 Losone(CH)**
Erfinder: **Boccadoro, Marco**
**Brogirolo**
**CH-6653 Verscio(CH)**

(74) Vertreter: **EGLI-EUROPEAN PATENT ATTORNEYS**
**Widenmayerstrasse 5**
**D-80538 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein numerisches Steuersystem für hochdynamische Prozesse nach dem Oberbegriff des Patentanspruchs 1.

G. Gruhler und M. Keppler beschreiben in ihrem Artikel "Automatische Datenreduktion und Auswahl der Interpolationsart bei Roboter-Bewegungsprogrammen" (in: Industrieanzeiger, HGF Kurzberichte der Hochschulgruppe Fertigungstechnik der Technischen Hochschulen und Universitäten der Bundesrepublik Deutschland, HGF 624 84/1, Nr. 1/2 v. 6.1.1984, S. 25 und 26) ein Verfahren zur Reduzierung überflüssigen ISO-Codes durch eine Interpolation, der durch eine handgeführte Musterprogrammierung (Teach in) z.B. eines Schweissroboters entstanden ist. Dabei geht es jedoch nicht um eine Datenreduktion während des eigentlichen, zeitkritischen Interpolationsvorganges. Das Interpolationskriterium ist zwar auch eine zulässige Bahntoleranz. Das resultierende Datenkonzentrat ist jedoch immer noch ISO-Code.

Die DE-A-20 30 711 zeigt eine rekursive Funktionsberechnung erster Ordnung. Dieses Verfahren ist wegen seines großen systematischen Fehlers für eine Grobinterpolation mit einem Zeitraster von z.B. 20 ms ungeeignet. Es handelt sich ferner um einen einstufigen Interpolator mit Zeitrasterausgabe mit allen nachstehend noch näher diskutierten Problemen. Der Grobinterpolator arbeitet nicht zeitrasterunabhängig.

Die DE-A-28 45 953 zeigt ein für nicht hochdynamische Prozesse ausgelegtes Steuersystem. Es liegt zwar im Prinzip ein zweistufiger Interpolator vor. Der Grobinterpolator rechnet jedoch ebenfalls in einem festen Zeitraster. Analoges gilt für die DDR Patentschriften 132610 und 132611, die eine zweistufige, jedoch auf eine Kreisinterpolation beschränkte, Interpolation mit einem festen Zeitraster des Grobinterpolators zeigen.

Insbesondere befaßt sich die vorliegende Erfindung mit einem numerischen Steuersystem zum Durchführen einer Bahninterpolation für die Steuerung hochdynamischer Prozesse, wie beispielsweise der funkenerosiven Metallbearbeitung und Laserbearbeitung. Ein numerisches Steuersystem der im

Ein numerisches Steuerungssystem für hochdynamische Prozesse mit einem Grobinterpolator zum Ausgeben von Bahnelementen und von einzuhaltenden Prozessparametern, mit einem dem Grobinterpolator nachgeschalteten Feininterpolator zur Feininterpolation der Bahnelemente nebst zugehöriger Steuerung und einem Zwischenspeicher ist bereits aus dem Fachbuch "R. Nann, Rechnersteuerungen von Fertigungseinrichtungen", ISW 4, Springer-Verlag, Berlin, Heidelberg, New York, 1972, S 113 - 123, bekannt. Bei dem bekannten Steuersystem arbeitet der Grobinterpolator in einem festen Zeitraster, in dem ebenfalls der dem Grobinterpolator nachgeschaltete lineare Feininterpolator arbeitet. Der nötige Datenaustausch zwischen dem Grobinterpolator und dem Feininterpolator findet gleichfalls innerhalb dieses Zeitrasters in vorbestimmten zeitlichen Abständen statt. Die Durchführung der Grobinterpolation und Feininterpolation in einem gemeinsamen festen Zeitraster führt bei der Bahninterpolation für schwach gekrümmte Konturen zu einem unnötig kleinen Stützpunktabstand. Demzufolge wird für derartige Konturen eine unnötige Datenflut erzeugt, so daß der Grobinterpolator mit unnötigen Berechnungen belastet ist. Ein anderes Problem, das sich aus der Interpolation im festen Zeitraster ergibt, tritt bei der Berechnung der letzten Stützpunkte am Ende der durch Interpolation errechneten Bahn auf, wenn ein bestimmter Endpunkt der Bahn erreicht werden soll. Das letzte Bahnelement weist üblicherweise eine von den vorherigen Bahnelementen abweichende Länge auf, so daß der Bahnendpunkt in dem festen Zeitraster nur durch einen Geschwindigkeitssprung erreicht werden kann.

Verschiedene Interpolationsverfahren, die jedoch ebenfalls an ein festes Zeitraster gebunden sind, sind in dem Fachbuch "D. Binder, Interpolation in numerischen Bahnsteuerungen", ISW 24, Springer-Verlag, Berlin, 1979, S 60 - 113 beschrieben und miteinander verglichen. In diesem Fachbuch wird auf den S 113 und 114 ein linearer Feininterpolator nach dem "Pulse-Rate-Multiply"-Verfahren offenbart. Ein derartiger Feininterpolator erlaubt jedoch keine Rückwärtsinterpolation. Ein weiterer Nachteil dieses Feininterpolators besteht darin, daß die Feininterpolation nur über den Gesamtbereich des Interpolators durchgeführt werden kann.

Gegenüber diesem Stand der Technik liegt der vorliegenden Erfindung die Aufgabe zugrunde, ein numerisches Steuersystem der eingangs genannten Art so weiterzubilden, daß bei Reduktion der für die Bahninterpolation nötigen Datenmenge eine Steigerung der Interpolationsgeschwindigkeit erreicht wird.

Diese Aufgabe wird bei einem numerischen Steuersystem nach dem Oberbegriff des Patentanspruchs 1 durch die im kennzeichnenden Teil des Patentanspruchs 1 angegebenen Merkmale gelöst.

Das erfindungsgemäße numerische Steuersystem arbeitet zeitrasterunabhängig und führt somit eine geometrieabhängige adaptive Steuerung durch, bei der nur eine minimale Datenmenge erzeugt wird, wodurch Totzeiten weitgehend vermieden werden. Eine vom Servosystem geforderte Geschwindigkeit wird von dem Erfindungsgemäßen Steuersystem durch die geometrieabhängige Berechnung genau eingehalten. Das erfindungsgemäße Steuersystem erlaubt ferner neben der Vorwärtsinterpolation auch eine Rückwärtsinterpolation.

Das erfindungsgemäße Steuersystem ermöglicht die Steuerung hochdynamischer Prozesse in Echtzeit mit allen für die Steuerung nötigen Informationen. Damit ermöglicht das Steuersystem sehr hohe Bahngeschwindigkeiten bei hoher Wegauflösung. Ein übergeordneter Rechner, der als Grobinterpolator eingesetzt wird, wird nur minimal belastet und bleibt somit für weitere Aufgaben verfügbar.

Mit dem erfindungsgemäßen numerischen Steuersystem kann ein Laserschneiden mit einer Geschwindigkeir von 10 m/Min bei Weginkrementen von 1 Micrometer durchgeführt werden. Bei der funkenerosiven Bearbeitung kann das numerische Steuersystem nach der vorliegenden Erfindung eine Bearbeitungsgeschwingkeit von 1 m/Min bei Weginkrementen von 100 nm erzielen.

Erhebliche Vorteile ergeben sich bei dem erfindungsgemäßen Steuersystem auch durch die mögliche Modulariät, die sich aus der entkoppelten selbständigen Arbeitsweise des Feininterpolators gegenüber dem Grobinterpolator ergibt.

Die mit der Geometrie synchronisierte Echtzeitausgabe von Prozeßparametern ermöglicht bei vielen Verfahren eine höhere Leistung und Genauigkeit. Bevorzugte Weiterbildungen und Ausgestaltungen sind Gegenstand der Unteransprüche.

Ausführungsformen des erfindungsgemäßen numerischen Steuersystemes werden nachfolgend unter Bezugnahme auf die beiliegenden Zeichnungen näher erläutert. Es zeigen:

Fig. 1    ein Blockdiagramm eines numerischen Steuersystems;

Fig. 2    eine Darstellung einer vierachsigen räumlichen Bewegung;

Fig. 3    eine Darstellung einer zirkularen Grobinterpolation;

Fig. 4    eine Darstellung für die Erläuterung der Berechnung des Bahnfehlers und der Achsenkomponenten für die zirkulare Grobinterpolation;

Fig. 5    eine Darstellung einer linearen Grobinterpolation;

Fig. 6    eine Darstellung zur Erläuterung der Berechnung des Bahnfehlers und der Achsenkomponenten für die lineare Grobinterpolation;

Fig. 7    eine Schaltung eines programmierbaren Frequenzteilers eines Feininterpolators;

Fig. 8    ein Blockdiagramm des Feininterpolators und

Fig. 9    eine Blockschaltung für eine Steuerung für vier mögliche Prozesse.

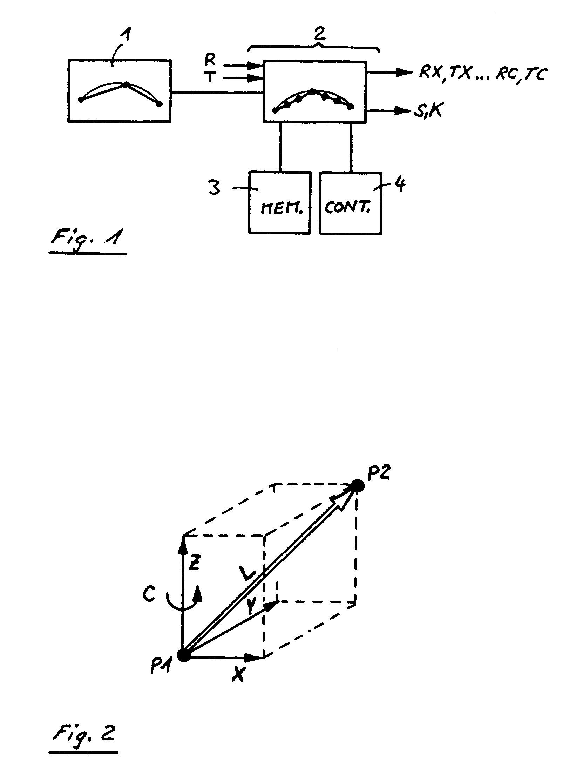

Fig. 1 zeigt die beiden Hauptkomponenten des Systems: den Grobinterpolator 1 welcher die Geometrie auf Geradenabschnitte reduziert und diese reduzierte Geometrie zusammen mit weiteren Steuerinformationen an den Feininterpolator 2 weitergibt und den Feininterpolator 2 der seinerseits Informationen über Systemzustand, Prozesszustand oder erreichte Geometriepunkte an den Grobinterpolator 1 zurückmelden kann.

Der Feininterpolator 2 enthält einen Zwischenspeicher 3 ,in dem die Informationen vom Grobinterpolator 1 geordnet abgelegt werden. Dieser Zwischenspeicher 3 wird normalerweise mit RAM (Schreib- und Lesespeicher mit freiem Zugriff) bestückt.

Die Kapazität des Speichers kann ohne weiteres bis zu einem Mbyte, d.h. einer Million 8-bit-Datenworte betragen. Eine kleinste Auführung hätte etwa 2 Kbyte und würde bei langen Programmen bei laufendem Prozess - nach erfolgter Rückmeldung - vom Grobinterpolator 1 asynchron nachgeladen. Auch dieser Vorgang kann natürlich blockweise vorwärts und rückwärts ausgeführt werden, so dass man immer bis zum Startpunkt zurück interpolieren kann.

Der Feininterpolator 2 enthält weiter ein autonomes Steuersystem 4, welches im wesentichen aus einer Ablaufsteuerung besteht. Diese Ablaufsteuerung wird durch verschiedene Steuersignale aktiviert und führt, noch abhängig von Zustandssignalen, eine von mehreren vorprogrammierten Steuersequenzen aus. Diese Steuersequenzen bewirken z.B., dass der Feininterpolator ein Byte vom Grobinterpolator 1 annimmt, dieses an der um 1 inkrementierten Adresse des Zwischenspeichers 3 abspeichert und die Annahme dem Grobinterpolator 1 quittiert. Wenn das Servowegraster-Taktsignal T ein neues Weginkrement fordert, wird in Abhängigkeit vom Servo-Richtungssignal R eine Steuersequenz zum Vorwärts - bzw. Rückwärtsinterpolieren aktiviert. Die Ablaufgeschwindigkeit kann so hoch sein, dass schon Mikrosekunden nach dem Servowegraster-Taktsignal T oder sogar noch früher die Achsenausgänge RX,TX,RY,TY,RZ,TZ,RC,TC die richtigen Weginkremente aufweisen. Es ist auch möglich, zwischen zwei Weginkrementen noch Prozessparameter S,K auszugegeben; diese können im Zwischenspeicher 3 an diesem Punkt der Geometrie abgelegt sein, oder vom Grobinterpolator 1 als direktes, manuelles Kommando ausgegeben werden, das seinerseits eine entsprechende Steuersequenz auslöst. Die Prozessparameter S,K bestehen aus einer Adresse S, die sagt, wecher Parameter des Systems oder des Prozesses verändert werden soll, und einem Wert K, welcher der neuen Einstellung dieses Parameters entspricht. So können alle Parameter über einen Bus und je einen Adressendekodierer, welcher im Koinzidenzfall den Wert K in ein Register annimmt, ohne grossen Verdrahtungsaufwand gesteuert werden.

EP 0 270 059 B1

Fig. 2 zeigt am Beispiel einer vierachsig gesteuerten Senkerosionsmaschine räumlich dargestellt die Bahnelemente L,X,Y,Z,C wie sie vom Grobinterpolator 1 ausgegeben werden. Ein Vektor der Länge L verbindet in gerader Linie den Raumpunkt P1 mit dem Raumpunkt P2, und weicht dabei, wie nachfolgend erklärt wird, nirgends mehr als einen zulässigen Bahnfehler E von der gewollten Bahn ab.

Diese Vektorlänge L ist nachher die Referenz für die Aufsummierung der Servowegraster-Taktsignale, womit eine vektorielle Geschwindigkeitstreue des Systems garantiert wird. Die kartesischen Achsenkomponenten X, Y, Z sowie die Komponente für die Drehung C um die Z-Achse werden ebenfalls an den Feininterpolator übergeben und bestimmen nachher das Teilungsverhältnis in einem programmierbaren Frequenzteiler 5. Die Anzahl und Art der Achsen kann von Prozess zu Prozess stark differieren. So haben funkenerosive Drahtschneidmaschinen neben den drei Hauptachsen X,Y,Z noch die Konikachsen U,V. Auch moderne Laserschneidmaschinen haben mindestens fünf Achsen, um den Laserstrahl auf vorgeformte Blechteile immer optimal auszurichten.

Heutige preiswerte Personalcomputer können mathematische Gleitkommaoperationen recht schnell und genau ausführen, sofern nicht Winkelfunktionen (z.B. Sinus, Cosinus oder Tangens) verlangt werden. Anderseits gibt es jetzt digitale Signalprozessoren und Einchip-Gleitkommaprozessoren, welche für die Rechengeschwindigkeit der Grundoperationen keine Wünsche mehr offen lassen. So bringen es neue Chips in 100ns fertig, eine 32-bit Gleitkomma-Addition oder -Multiplikation auszuführen.

Ein Gleitkomma-Prozessor schafft bei doppelter Genauigkeit (11 bit Exponent, 52 bit Mantisse) alle Grundoperationen und Quadratwurzeln in weniger als $8\mu s$, während z.B. eine Tangensfunktion schon $30\mu s$ benötigt.

Weil zudem viele Prozessoren überhaupt keine Winkelfunktionen im Befehlssatz haben, ist ein Grobinterpolator, welcher diese Winkelfunktionen nicht benötigt, sehr vorteilhaft.

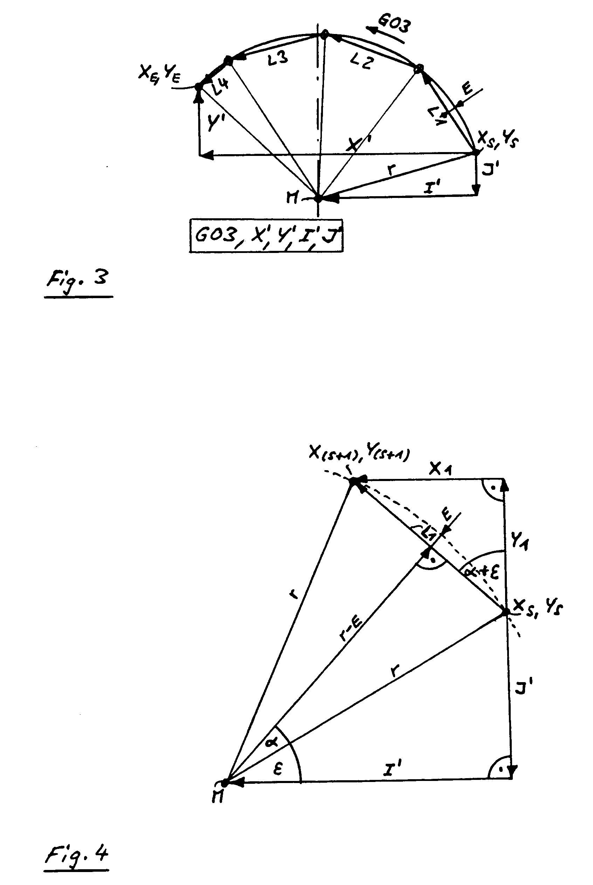

Fig. 3 und 4 illustrieren das Prinzip der Grobinterpolation ohne Winkelfunktionen: Ein Kreisstück soll im Gegenuhrzeigersinn gefahren werden. Die Information liegt z.B. nach DIN 66025 in ISO-Code vor, wobei GO3 zirkulare Interpolation im Gegenuhrzeigersinn bedeutet, $X'$, $Y'$ sind die Differenzmasse zwischen den Startkoordinaten $X_S$, $Y_S$ und den Endkoordinaten $X_E$, $Y_E$ . $I'$ und $J'$ sind schliesslich die Differenzmasse zwischen den Startkoordinaten $X_S$, $Y_S$ und dem Kreismittelpunkt M . Der Winkel $\epsilon$ wird von der X-Achse und der Verbindungslinie Kreismittelpunkt M -Startkoordinaten $X_s$, $Y_s$ eingeschlossen. Der Winkel $\alpha$ wird von dieser Verbindungslinie und dem Lot vom Kreismittelpunkt M auf den Vektor $L_1$ eingeschlossen.

Damit der Feininterpolator 2 nur linear zu interpolieren braucht, und nur eine minimale Datenmenge erzeugt wird, muss ein Polygonzug $L_1...L_4$ gefunden werden, der nirgends um mehr als einen Fehlerwert E von höchstens einem zulässigen Wert gegenüber dem theoretischen Kreis abweicht. Dieser zulässige Fehler kann z.B. $1\mu m$ betragen, oder aber z.B. für Zerstörungsschnitte, bei denen die Genauigkeit keine Rolle spielt, sehr viel mehr.

Zur besseren Uebersichtlichkeit wird nachfolgend auf die vektorielle Schreibweise verzichtet.

Man geht nun folgendermassen vor:

1. Es wird der Kreisradius (r) bestimmt

$$r = \sqrt{I'^*I' + J'^*J'}$$

2. Nun kann über das rechtwinklige Dreieck mit dem Winkel$\alpha$ (in Fig. 4) die maximale Sehnenlänge L bei gegebenem Fehler E bestimmt werden.

$$L_1 = 2^* \sqrt{r^*r - (r-E)^*(r-E)}$$

3. Anhand einer gespeicherten Liste für zulässige Werte von L, welche später noch erläutert wird, kann der nächstkleinere, ganzzahlige Wert der Vektorlänge L ausgewählt werden.

Da die Vektoren $L_1...L_3$ alle gleichlang sind, müssen die vorgenannten Berechnungen nur einmal pro Geometriesatz ausgeführt werden.

4. Da die Winkelsumme in Dreiecken immer $180°$ ist, kann man nachweisen, dass der Winkel zwischen $L_1$ und $Y_1$ der Summe von $\alpha + \epsilon$ entspricht.

Damit wird $X_1 = L_1^*\sin(\alpha + \epsilon)$ und $Y_1 = L_1^*\cos(\alpha + \epsilon)$.

Nach goniometrischer Umformung ergibt sich, dass

$\sin(\alpha + \epsilon) = \sin\epsilon^*\cos\alpha + \cos\epsilon^*\sin\alpha$ ist, und dass

$\cos(\alpha + \epsilon) = \cos\epsilon^*\cos\alpha - \sin\epsilon^*\sin\alpha$ ist.

4

Aus Fig. 4 folgt nun, dass

$\sin\alpha = L_1/(2^*r)$, $\cos\alpha = 1-E/r$
$\sin\epsilon = J'/r \cos\epsilon = I'/r$ ist.

Damit sind die Winkelfunktionen eliminiert und die gesuchten Achsenkomponenten $X_1$, $Y_1$ ergeben sich wie folgt:

$X_1 = L_1 (J'/r^*(1-E/r) + I'/r^*L_1/(2^*r))$
$Y_1 = L_1 (I'/r^*(1-E/r) - J'/r^*L_1/(2^*r))$

Man sieht noch, dass nur $J'$ und $I'$ Variablen sind, während dem der Rest pro Geometriesatz konstant ist, und ebenfalls nur einmal berechnet werden muss. Jetzt wird:

$X_1 = J'^*K_1 + I'^*K_2 \qquad K_1 = L_1^*(1-E/r)/r$
$Y_1 = I'^*K_1 - J'^*K_2 \qquad K_2 = L_1^*L_1/(2^*r^*r)$

5. Eventuelle alte Rundungsfehler werden nun zu $X_1$ und $Y_1$ addiert und das Resultat auf eine ganze Zahl gerundet. Der neue Rundungsfehler wird abgespeichert.
6. Die ersten Bahnelemente $L_1$, $X_1$, $Y_1$ können an den Feininterpolator 2 ausgegeben werden.
7. Es werden die neuen Differenzmasse zu den Endkoordinaten $X_E$, $Y_E$ berechnet:

X-Achse $= X'-X_1 \qquad$ Y-Achse $= Y' - Y_1$

sowie die neuen Kreismittelpunktmasse:

$I'_1 = I'-X_1, \qquad J'_1 = J'-Y_1$

8. Nun wiederholt man solange das Vorgehen nach Punkt 4 bis 7 bis die Endkoordinaten $X_E$, $Y_E$ mit einer letzten nach Tabelle zulässigen Vektorlänge L erreicht werden können.
In Fig. 3 ist das z.B. $L_4$. Der Vektor $L_4$ kann damit höchstens gleichlang wie $L_1$ werden. Gestattet die Tabelle der zulässigen Vektorlängen L keinen direkten Sprung, so kann der Vektor $L_4$ aus zwei oder mehreren Bahnelementen L,X,Y zusammengesetzt werden. Mit diesem Schluss-Vektor $L_4$ können verschiedene Fehler kompensiert werden, z.B. der letzte Rundungsfehler, die endliche Rechengenauigkeit des verwendeten Prozessors und die oft störende Ueberbestimmtheit der Endkoordinaten $X_E$, $Y_E$ durch den ISO-Code.

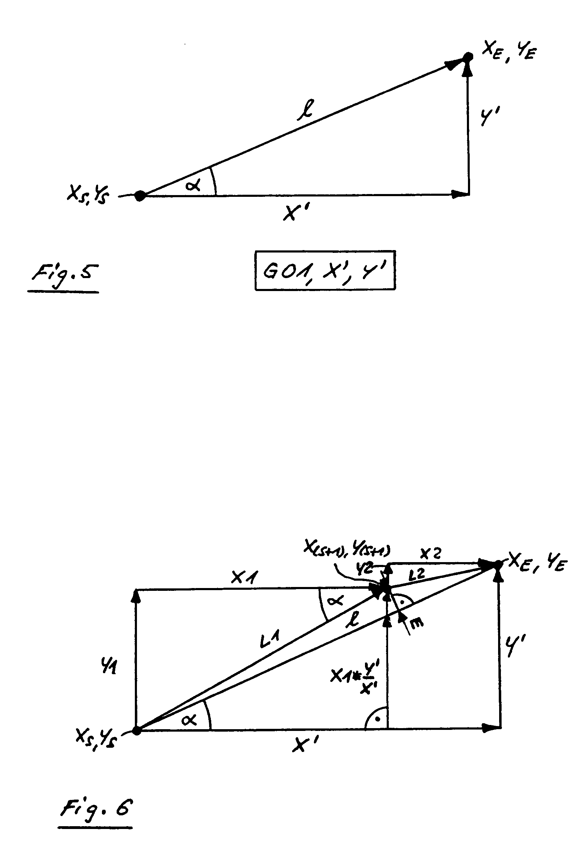

Die Fig. 5 und Fig. 6 zeigen analog das Berechnungsverfahren für die lineare Grobinterpolation. Im ISO-Code bedeutet G01 lineare Interpolation. $X'$ und $Y'$ sind wiederum die Differenzmasse zwischen den Startkoordinaten $X_S$, $Y_S$ und den Endkoordinaten $X_E$, $Y_E$ .
Die lineare Interpolation ist insofern ein Spezialfall als häufig Geometriesätze auftreten, welche nur eine Achse betreffen. Durch die beschränkte Stellenzahl des Feininterpolators 2 (siehe dazu auch D. Binder, Seite 114) wird es sinnvoll einen Multiplikationsfaktor N den Bahnelementen L,X,Y,Z,C beizugeben, welcher bestimmt, wie oft ein Bahnelement L,X,Y,Z,C im Feininterpolator 2 ausgeführt werden soll. Damit erreicht man eine weitere drastische Reduktion der Datenmenge.
Es sei angenommen, in X-Richtung müsse man 127.000 mm mit einer Geschwindigkeit von nur 10 mm/min und Weginkrementen von 1$\mu$m interpolieren. Im festen Zeitrasterprinzip von 20 ms würde dabei ein traditioneller Grobinterpolator eine Datenflut von 38'100 Bahnelementen L,X,Y,Z,C erzeugen, mit dem vorgeschlagenen Prinzip jedoch kann dies mit einem einzigen Bahnelementensatz N*L,X,Y,Z,C erledigt werden, sofern der Feininterpolator 7-stellig ist.
Bei mehrachsiger Bewegung und kleinem zulässigen Bahnfehler E ist zwar der Gewinn kleiner als im obigen Beispiel, da die Datenmenge aber nur geometrieabhängig ist, kommt man immer mit einer viel geringeren Rechnerbelastung aus.
In Fig. 5 ist die theoretisch geforderte lineare Bahn mit $\ell$ bezeichnet. Sie schliesst mit $X'$ den Steigungswinkel $\alpha$ ein. Tangens $\alpha$ ist also $Y'/X'$, Cosinus $\alpha$ ist gleich $X'/\ell$, und Sinus $\alpha$ ist gleich $Y'/\ell$.
In Fig. 6 ist dargestellt, wie die theoretische Bahn $\ell$ mit z.B. zwei Sätzen von Bahnelemente $L_1$, $X_1$, $Y_1$ und $L_2$, $X_2$, $Y_2$ ausgeführt werden kann, wobei der Bahnfehler E rechtwinklig zur theoretischen Bahn $\ell$ entsteht.

Der Algorithmus versucht also mit einem grösstmöglichen $L_1$ in die Nähe der Endkoordinaten $X_E$, $Y_E$ zu gelangen. Dabei werden von vornherein nur nach abgespeicherter Tabelle zulässige Vektorlängen L verwendet. Es können dann die Achsenkomponenten $X_1$, $Y_1$ berechnet und auf ganzzahlige Beträge welche in den Wegraster passen, gerundet werden. Es wird $X_1$ = $L_1$*$X'$/$\ell$ und $Y_1$ = $L_1$*$Y'$/$\ell$. Anschliessend ist abzuklären, ob der erzeugte Bahnfehler E kleiner oder gleich dem zulässigen Wert ist. Dabei ist E = ($Y_1$ - $X_1$*$Y'$/$X'$)*$Y'$/$\ell$. Ist dieser Bahnfehler (E) zu gross, wird die ganze Berechnung mit der nächstkleineren zulässigen Vektorlänge L wiederholt, andernfalls werden die ersten Bahnelemente $L_1$, $X_1$, $Y_2$ an den Feininterpolator 2 ausgegeben.

Anschliessend wird die neue Massdifferenz zu den Endkoordinaten $X_E$, $Y_E$ berechnet: X-Achse = $X'$-$X_1$ und Y-Achse = $Y'$-$Y_1$ und die Prozedur so oft wiederholt, bis die Massdifferenz zu Null wird. Die Rundungsfehler und Berechnungsrestfehler werden dabei automatisch eliminiert.

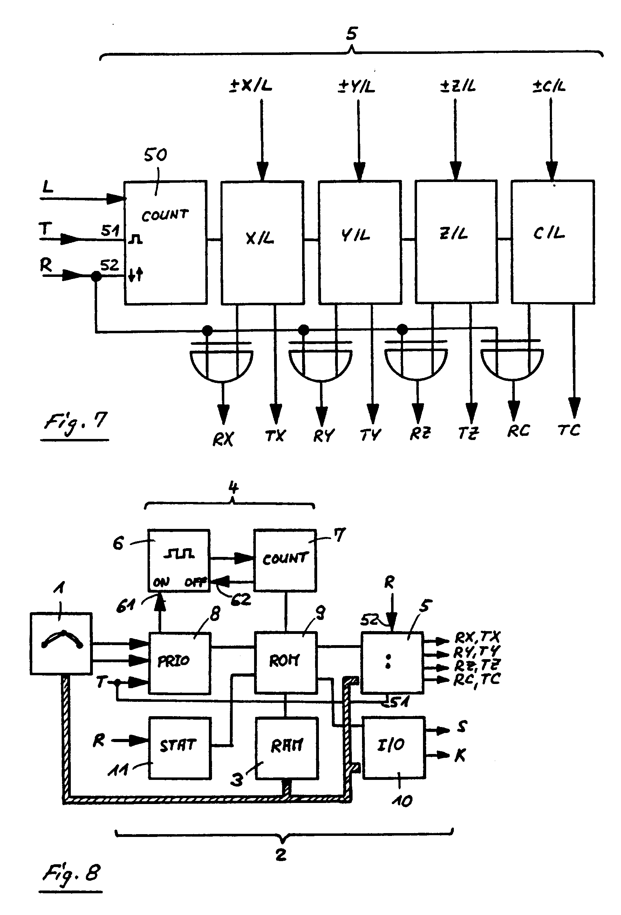

Fig. 7 stellt ein Ausführungsbeispiel eines programmierbaren Frequenzteilers 5 des Feininterpolators 2 dar. Die Schaltung kann mit üblichen Logikbausteinen oder in Gatearray-Technik aufgebaut werden. Prinzipiell ist die Funktion dieselbe wie die der Schaltung von D. Binder, Seite 73 und 114, mit dem Unterschied, dass der programmierbare Frequenzteiler 5 alle zulässigen Vektorlängen L fehlerlos in allen möglichen Teilverhältnissen teilen kann, und die Interpolation vorwärts und rückwärts möglich ist. Um dies zu erreichen, ist ein Zähler 50 vorhanden welcher auf einen Startwert gleich der Vektorlänge L programmiert werden kann, über den Takteingang 51 die Servowegraster-Taktsignale T empfängt und über den Richtungseingang 52 entsprechend dem Servorichtungssignal R den Zählerinhalt inkrementiert oder dekrementiert. Die Achsenkomponentenregister X/L, Y/L, Z/L, C/L enthalten die jeweiligen Achsenkomponenten X,Y,Z,C welche aber normalerweise schon vom Grobinterpolator 1 durch einen optimierten Wert geteilt und gerundet werden. Dieser Wert ist für einen siebenstelligen Feininterpolator 2 gleich der Vektorlänge L geteilt durch 128, wobei 127.97 bis 128.01 gleich gute Resultate ergibt. Diese Konstante 128 kann experimentell oder durch eine Computersimulation ermittelt werden. Der optimale Wert ist der welcher die grösste Anzahl zulässiger Vektorlängen L ergibt, die für keine Achsenkomponenten-Kombination X,Y,Z,C einen durch Rundung bedingten Endfehler erzeugen. Wenn z.B. für die X-Achse 80 Weginkremente vom Grobinterpolator 1 berechnet wurden, müssen später auch genau deren 80 vom Feininterpolator 2 auf den Achsenausgang TX ausgegeben werden. Für das erwähnte Beispiel ergeben sich 43 zulässige Vektorlängen und man erhält folgende im Grobinterpolator 1 abzuspeichernde Tabelle:

1 bis 10 lückenlos, dann 12, 14, 15, 16, 17, 18, 20, 24, 28, 30, 31, 32, 33, 34, 36, 40, 48, 56, 60, 62, 63, 64, 65, 66, 68, 72, 80, 96, 112, 120, 124, 126, 127.

Nach kurzer Analyse dieser Werte sieht man, dass jede Vektorlänge L zwischen 1 und 127 aus höchstens 2 Teilvektoren kombiniert werden kann.

Die Achsenkomponentenregister X/L, Y/L, Z/L, C/L enthalten noch ein zusätzliches bit, welches aussagt in welcher Richtung die Achsenkomponenten X,Y,Z,C wirken sollen. Dieses bit wird über Exclusivoder-Tore mit dem Servo-Richtungssignal R verknüpft und ergibt danach die Bewegungsrichtungen RX, RY, RZ, RC. Die Erzeugung der Taktsignale erfolgt in gleicher Weise wie von D. Binder, im erwähnten Buch auf Seite 72 und 73 erklärt, wobei bei der Rückwärtsinterpolation die abfallenden Flanken der Ausgänge des Zählers 50 detektiert und mit dem Achsenkomponentenregister-Inhalt undverknüpft werden.

Das nachfolgende Assembler-Listing beschreibt einen Alorithmus für einen 8051-Prozessor

welcher die in Fig. 7 gezeigte Feininterpolation ausführen kann. Allerdings sind bei diesem Ausführungsbeispiel 42 Maschinenzyklen für eine Weginkrementausgabe notwendig, was im schlechtesten Fall, bei einer neuen Segmentübernahme zu einer Totzeit von 54$\mu$s führt. Für normale Anforderungen kann diese Zeit durchaus toleriert werden, für Hochgeschwindigkeitssysteme ist das jedoch etwa um den Faktor 10 zu langsam. Darum ist für diese Anwendungen die diskrete Lösung oder gegebenenfalls eine gemischte Variante zu bevorzugen.

```
;       FINE INTERPOLATION WITH AT LEAST 4 AXES
;
;       (PART OF INTERRUPT SERVICE ROUTINE IN RESPONSE
;        TO A SERVO STEP PULSE)
;
;       MACHINE :      8051 INTEL MICROCONTROLLER AT 12MHz
;
;       LANGUAGE:      8051 MACRO ASSEMBLER
;
;       DESCRIPTION OF USED VARIABLES
;       -----------------------------
;
;       SFWD           =      servo direction, 1 = forward, 0 = backward
;       LVECTOR        =      vector sum of x,y,z,c interpolation segments + 1
;       LCTR           =      counter of vector L
;       LCTR_OLD       =      LCTR value one step ago
;       X              =      X segment (bits in reverse order)
;       Y              =      Y segment (bits in reverse order)
;       Z              =      Z segment (bits in reverse order)
;       C_SEGM         =      C segment (bits in reverse order)
;       DIR_COMMAND    =      byte containing the directions of axes
;       DIRBYTE        =      dir pattern for output port to hardware
;       STEPBYTE       =      steps pattern for output port to hardware
;       STEPX          =      flag to output a step on X ax (same for Y,Z,C)
;
;                                  .
;                                  .
;                                  .
;
;       Bidirectional interpolation within a segment
;
;                                       ; NUMBER OF MICROSEC PER INSTRUCTION
;       CODE                                v
;                                           v
;                                           v
;       JB      SFWD,INT_FORW               ; 2 SKIP IF STEP FORWARD
;
;       HERE BACKWARD
;
        MOV     A,DIR_COMMAND               : 1
        CPL     A                           : 1
        MOV     DIRBYTE,A                   : 1 COMPLEMENT DIRECTIONS IF BACKW
;
        DJNZ    LCTR,IB1                    : 1 IF SEGMENT FINISHED, LOAD NEW SEGM
        JMP     GET_NEWSEG                  : 12 GET NEW SEGMENT
IB1:    MOV     A,LCTR_OLD                  : 1
        XRL     A,LCTR                      : 1 GIVES BITS THAT CHANGED
        MOV     B,A                         : 1 SAVE TEMP
        MOV     A,LCTR                      : 1
        CPL     A                           : 1
        ANL     A,B                         : 1 GIVES BITS THAT CHANGED FROM 1 TO 0
        MOV     B,A                         : 1

;
; B HOLDS A PATTERN THAT, IF 'ANDed' WITH X,Y,Z,C SEGM
; CONTROLS THE STEP EXECUTION,I.E. WICH AX AND WHEN HAS TO
; OUTPUT A STEP
; THERE IS NO LIMITATION FOR THE NUMBER OF AXES
```

```
DISTR STEPS:
        ANL     A,X         ; 1 STEP ON X AX ?
        JZ      NOX         ; 2 NO
        SETB    STEPX       ; 1 YES, SET FLAG
NOX:    MOV     A,B         ; 1 RESTORE PATTERN
        ANL     A,Y         ; 1 STEP ON Y AX ?
        JZ      NOY         ; 2 NO
        SETB    STEPY       ; 1 YES, SET FLAG
NOY:    MOV     A,B         ; 1 RESTORE PATTERN
        ANL     A,Z         ; 1 STEP ON Z AX ?
        JZ      NOZ         ; 2 NO
        SETB    STEPZ       ; 1 YES, SET FLAG
NOZ:    MOV     A,B         ; 1 RESTORE PATTERN
        ANL     A,C_SEGM    ; 1 STEP ON C AX ?
        JZ      NOC         ; 2 NO
        SETB    STEPC       ; 1 YES, SET FLAG
NOC:
;
;       HERE INSERT MORE AXES
;
;       OUTPUT STEPS
;
        MOV     P1,STEPBYTE ; 2 OUTPUT STEPS TO PORT 1
        MOV     P2,DIRBYTE  ; 2 OUTPUT DIRECTIONS
        CLR     STEPBYTE    ; 1 RESET FLAGS STEPX, STEPY,...
;
        MOV     LCTR_OLD,LCTR ; 2 UPDATE COUNTER MEMORY
;
        JMP     INTI_END    ; 2 EXIT, TOTAL TIME 42 MICROSEC
                            ;   PLUS 12 MICROSEC TO LOAD A NEW
                            ;   SEGMENT

;-----------------------------------------------------------
;
INT_FORW:
;
;       HERE STEPS FORWARD
;
        MOV     A,DIR_COMMAND ; 1
        MOV     DIRBYTE,A   ; 1 SET DIRECTION AS PROGRAMMED
        INC     LCTR        ; 1 INCREMENT COUNTER
        CJNE    LCTR,LVECTOR,IB2 ; 2 IF SEGMENT FINISHED, LOAD NEW SEGM
        JMP     GET_NEWSEG  ; 12 GET NEW SEGM

;
IB2:    MOV     A,LCTR_OLD  ; 1
        XRL     A,LCTR      ; 1 GIVES BITS THAT CHANGED
        ANL     A,LCTR      ; 1 GIVES BITS THAT CHANGED FROM 0 TO 1
        MOV     B,A         ; 1 SAVE PATTERN
        JMP     DISTR_STEPS ; 2 SAME INSTR AS FOR BACKWARD STEPS

;
        .
        .
        .
INTI_END:
```

Fig. 8 zeigt das Blockschaltbild des Feininterpolators 2 . Der Grobinterpolator 1 sendet Steuersignale an den Prioritätsdekoder 8 , ein Datenbus verläuft zum Zwischenspeicher 3 , dem programmierbaren Frequenzteiler 5 und der Prozessparameter-Ausgabeschaltung10 . Der Prioritätsdekoder 8 empfängt ferner die Servowegraster-Taktsignale T , welche offensichtlich mit höchster Priorität verarbeitet werden müssen. Die übrigen Prioritäten sind system- und prozess-abhängig und müssen von Fall zu Fall festgelegt werden.

Nach der Aktivierung eines Eingangs des Prioritätsdekoders 8 wird der Oszillator 6 über dessen Starteingang 61 freigeben, worauf der Programmzähler 7 mit einer Frequenz von beispielsweise 30 MHz inkrementiert wird. Nach Erreichen des Maximalstandes des Programmzählers 7 wird der Oszillator 6 über den Stoppeingang 62 wieder angehalten. Diese Massnahme hat zum Zwecke, dass erstens nicht die Synchronisation mit einem freilaufenden Oszillator abgewartet werden muss, und zweitens die Verlustleistung des Systems trotz hoher Frequenz tief gehalten wird.

Die Ausgänge des Programmzählers 7 sind mit ersten Adresseingängen des festprogrammierten Programmspeichers 9 verbunden, zweite Adresseingänge sind mit dem Prioritätsdekoder 8 verbunden, und dritte Adresseingänge sind mit einem Statusregister 11 verbunden.

Damit können z.B. vier verschiedene Programmsequenzen in je vier verschiedenen Varianten zu je 15 Programmschritten initialisiert werden. Das Statusregister 11 beinhaltet z.B. Informationen darüber, ob das Servo-Richtungssignal R Vorwärts- oder Rückwärtsinterpolation verlangt, ob der Zähler 50 des programmierbaren Frequenzteilers 5 in Ueberlauf oder Unterlaufposition steht usw.

Zweck des Statusregister 11 ist es, die richtige Variante (z.B. Vorwärts- oder Rückwärtsinterpolation) eines Programms ablaufen zu lassen.

Die Datenausgänge des festprogrammierten Programmspeichers 9 steuern und koordinieren hauptsächlich die Aüsgabe der Achsenausgänge RX,TX,RY,TY,RZ,TZ,RC,TC des programmierbaren Frequenzteilers 5 , die Ausgabe der Prozessparameter S,K der Prozessparameter-Ausgabeschaltung 10 und das Schreiben und Lesen des Zwischenspeichers 3 .

Der Zwischenspeicher 3 kann 8 bit breit organisiert sein, oder aber bei entsprechenden Geschwindigkeitsanforderungen z.B. auch 48 bit breit, wovon 5mal 8 bit die Bahnelemente L,X,Y,Z,C und deren Richtung beschreiben, 2 bit den Multiplikationsfaktor N bestimmen, 5 bit zur Paritätskontrolle verwendet werden, und 1 bit aussagt, ob die vorliegende Adresse Geometrieinformation oder Prozessparameterinformation enthält. Die Organisation des Zwischenspeichers 3 muss nach den Anforderungen des Prozesses festgelegt werden, um die beste Geschwindigkeit bei bester Betriebssicherheit und günstigsten Kosten zu erreichen.

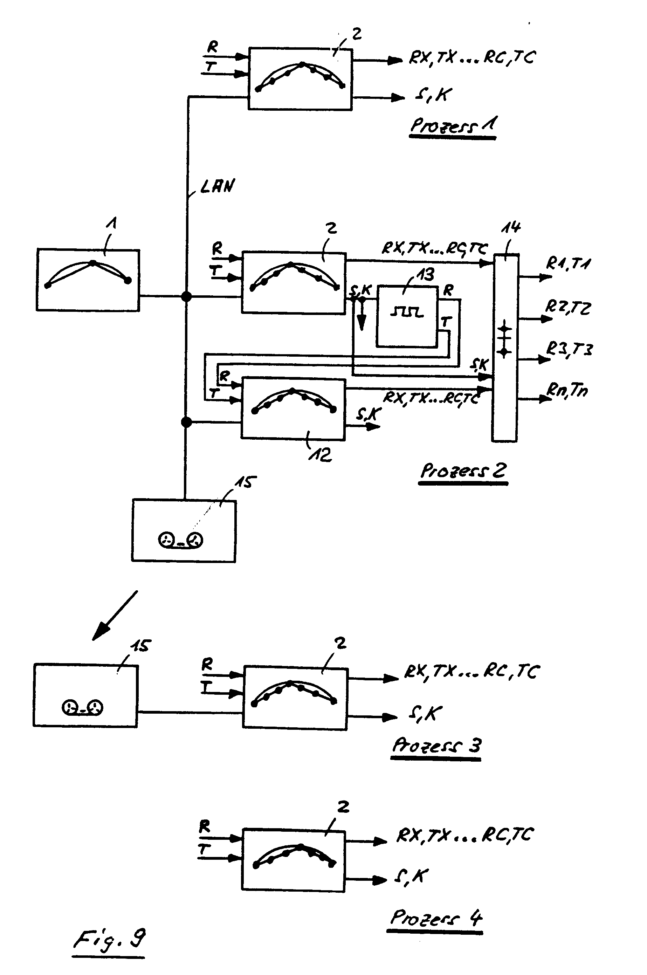

Fig. 9 illustriert einen Fertigungskomplex, welcher aus vier verschiedenen Prozessen besteht. Prozess 1 sei eine einfache, 4-achsig gesteuerte Senkerosionsmaschine, Prozess 2 eine hochkomplexe Schneid-Senkerodieranlage mit Elektrodenwechsler, Zuführeinheiten und Handhabungsrobotern, Prozess 3 sei eine Laserschneidanlage, und Prozess 4 sei eine Hochdruckwasserstrahl-Schneidanlage für Produktionszwecke. Dieses Szenario soll zeigen, wie anpassungs- und ausbaufähig das vorgeschlagene Steuersystem ist.

Es kann z.B. ein einziger potenter Grobinterpolator 1 zur direkten Steuerung der Prozesse 1 und 2 verwendet werden. Zusätzlich kann bei Bedarf ein nichtflüchtiges Speichermedium 15 mit den notwendigen Daten geladen werden, um den selbständigen Prozess 3 zu fahren, welcher keine Rückmeldungen zum Grobinterpolator 1 vorsieht. Schliessich ist der Prozess 4, welcher in Gross-Serien immer die gleichen Teile produziert, sozusagen auf Lebzeiten programmiert. Der Feininterpolator 2 des Prozesses 4 wird vorteilhafterweise mit einem Zwischenspeicher 3 versehen, welcher die Informationen nichtflüchtig speichert. Dies kann erreicht werden indem man die Speisung der RAM-Bausteine mit einer Batterie buffert oder elektrisch programmier- und eventuell löschbare Nurlese-Speicherbausteine verwendet.

Der Informationsfluss erfogt beim Prozess 3 über eine magnetische Band-Kassette oder Diskette, während die Prozesse 1 und 2 bidirektional über ein lokales Datennetzwerk LAN bedient werden.

Solche Datennetzwerke werden üblicherweise mit Koaxialkabel oder Fiberoptikleitungen aufgebaut. Wichtig ist, dass eine genügende Uebertragungskapazität vorhanden ist, damit hier nicht ein Flaschenhals für den Datenfluss entsteht.

Der Prozess 2 ist von besonderem Interesse, da hier mit einfachen Mitteln ein hochkomplexes Problem gelöst wird. Normalerweise werden Beschickungsroboter und Zuführeinheiten für Fertigungseinrichtungen mit eigenen numerischen Steuerungen ausgerüstet, welche dem Prozess untergeordnet werden. Während des Prozessablaufs sind diese numerischen Steuerungen zum Nichtstun verdammt. Mit der vorliegenden Erfindung kann die Auslastung der numerischen Steuersysteme extrem verbessert werden, indem man denselben Feininterpolator 2 verwendet, um den Schneiderosionsprozess, den Senkerosionsprozess, einen Beschickungsroboter und eine Zuführeinheit zu steuern. Dazu ist nur eine Schaltmatrix 14 notwendig, um die Achsenausgänge RX,TX,RY,TY,RZ,TZ,RC, TC richtig auf Schneidprozess, Senkprozess, Roboter oder Zuführeinheit umzuleiten. Prozesse, die keine Servosignale erzeugen, können dabei über einen steuerbaren Oszillator 13 in der Bahngeschwindigkeit geführt werden. Die Steuerung der Schaltmatrix 14 und des steuerbaren Oszillators 13 erfolgt wiederum über die Prozessparameter S,K. Der untergeordnete Feininterpolator 12 ist gleich aufgebaut wie der übergeordnete Feininterpolator 2 und muss nur vorhanden sein, wenn zeitgesteuerte Antriebsachsen bedient werden sollen. Die Investitions-Einsparung ist offensichtlich, da ein numerisches Steuersystem genügt, um mehrere Prozesse im Multiplexbetrieb zu führen.

**Patentansprüche**

1. Numerisches Steuerungssystem zum Durchführen einer Bahninterpolation für hochdynamische Prozesse wie funkenerosive Metallbearbeitung oder Laserbearbeitung, mit

   a) einem Grobinterpolator (1) zum Ausgeben von Bahnelementen (L, X, Y, Z, C) und von synchron mit der Geometrie in Echtzeit einzuhaltenden Prozeßparametern (S, K) mittels deren Adresse und deren neuem Einstellwert, der die Grobinterpolation zeitrasterunabhängig, aber abhängig von der Geometrie der Bahnkontur, ausführt,

   b) mindestens einem dem Grobinterpolator (1) insbesondere über einen Datenbus nachgeschalteten Feininterpolator (2) zur Feininterpolation der Bahnelemente (L, X, Y, Z, C) nebst zugehöriger Steuerung, wobei der Feininterpolator (2) zeitlich unabhängig vom Grobinterpolator (1) arbeitet,

   c) einem Zwischenspeicher (3) des Feininterpolators (2), der zur Zwischenspeicherung mehrerer vom Grobinterpolator (1) ausgegebener Bahnelemente (L, X, Y, Z, C) und Prozeßparameter (S, K) ausgelegt ist,

   wobei

   d) für den Datenaustausch zwischen Grobinterpolator (1) und Feininterpolator (2) kein gemeinsames festes Zeitraster vorgegeben ist, und hierzu

   e) die Steuerung des Feininterpolators (2) als vom Grobinterpolator (1) zeitlich unabhängiges Steuersystem (4) für die Ausführung der Feininterpolationsschritte, die Steuerung des Zwischenspeichers (3) und die Ausgabe der Prozeßparameter (S, K) selbstständig und in Echtzeit ausgelegt ist.

2. Numerisches Steuersystem nach Anspruch 1, dadurch gekennzeichnet, daß der Grobinterpolator (1) ein programmierbarer Rechner ist.

3. Numerisches Steuersystem nach Anspruch 2, dadurch gekennzeichnet, daß der Grobinterpolator (1) ein in einer Hochsprache programmierbarer Personalcomputer ist.

4. Numerisches Steuersystem nach einem der Ansprüche 1-3, , dadurch gekennzeichnet, daß der Grobinterpolator zur Rechnung mit Gleitkommaarithmetik ohne Verwendung von Winkelfunktionen ausgelegt ist.

5. Numerisches Steuersystem nach einem der Ansprüche 1-4, dadurch gekennzeichnet, daß der Grobinterpolator einen digitalen Einchip-Gleitkommaprozessor oder einen Signalprozessor aufweist.

6. Numerisches Steuersystem nach einem der Ansprüche 1-5, dadurch gekennzeichnet, daß der Grobinterpolator (1) Bahnelemente (L, X,Y,Z,C) in der Weise berechnet, daß für die Länge eines, benachbarte Interpolationsraumpunkte (P1, P2)verbindenden, Vektors nur solche Vektorlängen(L)zugelassen werden, daß der maximale Abstand des Vektors von der zu interpolierenden Kontur (Bahnfehler E) einen vorgegebenen Wert nicht überschreitet.

7. Numerisches Steuersystem nach Anspruch 6, dadurch gekennzeichnet, daß der Grobinterpolator derart ausgelegt ist, daß er

   a) bei der Berechnung der Bahnelemente (L,X,Y,Z,C) nur Vektorlängen (L) zuläßt, die im Feininterpolator (2) für keine Vektorlage einen Endfehler in den Achsenkomponenten (X,Y,Z,C) erzeugen, und

   b.1) die zulässigen Vektorlängen (L) anhand einer mathematischen Simulation oder eines Testlaufes des Feininterpolators (2) ermittelt und

   b.2) in Tabellenform im Grobinterpolator (1) abspeichert

8. Numerisches Steuersystem nach Anspruch 6 oder 7, dadurch gekennzeichnet, daß der Grobinterpolator (1) derart ausgelegt ist, daß er

   a) bei der Berechnung der Bahnelemente (L,X,Y,Z,C) die Rundungsfehler, welche bei der für den Feininterpolator (2) notwendigen Quantisierung entstehen, für die Berechnung der nachfolgenden Bahnelemente (L,X,Y,Z,C) mitberücksichtigt und

   b) vor jeder Berechnung der Bahnelemente (L,X,Y,Z,C) prüft, ob der Bahnendpunkt mit einer zulässigen Vektorlänge (L) erreicht werden kann, und in diesem Fall die letzten Achskomponenten (X,Y,Z,C) so wählt, daß der Schließfehler zu Null wird.

**9.** Numerisches Steuersystem nach einem der Ansprüche 6 bis 8, dadurch gekennzeichnet, daß der Grobinterpolator (1) derart ausgelegt ist, daß er die berechneten Bahnelemente (L,X,Y,Z,C) mit einem Faktor (N) multipliziert, der angibt, wie oft der Feininterpolator (2) eine Vektorlänge (L) nacheinander interpoliert.

**10.** Numerisches Steuersystem nach einem der Ansprüche 6 bis 9, dadurch gekennzeichnet, daß der Feininterpolator (2) mindestens einen programmierbaren Frequenzteiler (( Pulse-Rate- Multiplier (5)) mit einem Zähler (50), Achsenkomponenten-Registern (X/L, Y/L, Z/L, C/L) und einer Exklusiv-oder-Schaltung enthält, wobei

a) der Zähler aufweist:

a.1) einen Eingang zu seiner Programmierung mit der ermittelten Vektorlänge (L),

a.2) einen Takteingang (51) für ein Servowegraster-Taktsignal (T) und

a.3) einen Richtungseingang (52) für ein Servo-Richtungssignal (R) und

b) jedes der Achsenkomponenten-Register (X/L, Y/L, Z/L, C/L) einen Eingang für eine zusätzliche Richtungsinformation und einen Achsenausgang (TX, TY, TZ, TC) aufweist,

c) die Exklusiv-oder-Schaltung mehrere Gatter aufweist, von denen jedes an seinem einen Eingang vom Servo-Richtungssignal (R) und an seinem anderen Eingang vom jeweils zugeordneten Achsenkomponenten-Register (X/L, Y/L, Z/L, C/L) angesteuert wird, und hierdurch die Bewegungsrichtungen (RX, RY, RZ, RC) der Achsausgänge (RX, TX, RY, TY, RZ, TZ, RC, TC) bestimmt.

**11.** Numerisches Steuersystem nach Anspruch 10, dadurch gekennzeichnet, daß das zeitlich unabhängige Steuersystem (4) einen Prioritätsdekoder aufweist und derart ausgelegt ist, daß

a) es nur arbeitet, wenn

a.1) vom Grobinterpolator (1) ein Datenwort in den Zwischenspeicher (3) geladen oder

a.2) vom Grobinterpolator (1) ein manuelles Kommando direkt in den Prozeß eingeleitet oder

a.3) ein Servowegraster-Taktsignal (T) verarbeitet werden soll, und

b) ein Prioritätsdekoder (8) bei gleichzeitigem Anliegen mehrerer Signale deren Hierarchie bestimmt.

**12.** Numerisches Steuersystem nach einem der Ansprüche 1-11, dadurch gekennzeichnet, daß der Feininterpolator (2) mindestens einen festprogrammierbaren Sequenzlogikbaustein und/oder mindestens einen Arraylogikbaustein aufweist.

**13.** Numerisches Steuersystem nach Anspruch 12, dadurch gekennzeichnet, daß der Feininterpolator (2) aus fest verdrahteter Logik aufgebaut ist, bei welcher

a) ein fest programmierter Programmspeicher (9) mit

b) einem Prioritätsdekoder (8),

c) einem Statusregister (11),

d) einem Zwischenspeicher (3),

e) mindestens einem programmierbaren Frequenzteiler (5),

f) einer Prozeßparameter-Ausgabeschaltung (10) und

g) einem als Programmzähler wirkenden Zähler (7) verbunden ist, und

h) mit dem Zähler (7) ein vom Prioritätsdekoder (8) angesteuerter und einen Start- (61) und einen Stoppeingang (62) aufweisender Oszillator (6) verbunden ist.

**14.** Numerisches Steuersystem nach einem der Ansprüche 1 bis 11, dadurch gekennzeichnet, daß der Feininterpolator (2) ein programmierbarer Mikrorechner und derart ausgelegt ist, daß nach Hierarchie:

a) dessen Algorithmus, Prozeßparameter und Geometriedaten vom Grobinterpolator (1) in den Zwischenspeicher (3) lädt,

b) er über den Grobinterpolator (1) manuell eingegebene Kommandos direkt in den Prozeß einleitet und

c) er Servowegraster-Taktsignale (T) feininterpoliert und an die Achsenausgänge (RX, TX, RY, TY, RZ, TZ, RC, TC) abgibt.

**15.** Numerisches Steuersystem nach einem der Ansprüche 1-14, dadurch gekennzeichnet, daß der Zwischenspeicher (3) oder ein Teil davon ein nichtflüchtiger Speicher (z.B. batteriegepuffertes RAM) ist, und daß in den Zwischenspeicher alle Informationen einspeicherbar sind, die das System benötigt, um einen Prozeß beliebig oft zu wiederholen.

**16.** Numerisches Steuersystem nach einem der Ansprüche 1-15, dadurch gekennzeichnet, daß ein nichtflüchtiges Speichermedium (z.B. Diskette) zwischen den Grobinterpolator (1) und den Feininterpolator (2) geschaltet ist.

**17.** Numerisches Steuersystem nach einem der Ansprüche 1-16, dadurch gekennzeichnet, daß für den Fluß der Daten zwischen dem Grobinterpolator (1) und dem Feininterpolator (2) ein lokales Datennetzwerk (LAN) vorgesehen ist.

**18.** Numerisches Steuersystem nach einem der Ansprüche 1-17, dadurch gekennzeichnet, daß der Feininterpolator (2) zur Rückmeldung von Informationen über den Systemzustand, Prozeßzustand und/oder erreichte Geometriepunkte an den Grobinterpolator (1) ausgelegt ist.

**19.** Numerisches Steuersystem nach einem der Ansprüche 1-18, dadurch gekennzeichnet, daß der Zwischenspeicher (3) zur Aufnahme folgender Prozeßparameter (S,K) ausgelegt ist: geometrieabhängige Daten über Beschleunigung oder Verzögerung für das Servosystem.

**20.** Numerisches Steuersystem nach einem der Ansprüche 15-19, dadurch gekennzeichnet, daß der festprogrammierte Programmspeicher (9) zur Aktivierung einer von mehreren Programmsequenzen in Abhängigkeit der Signale von Prioritätsdekoder (8) und Statusregister (11) ausgelegt ist.

**21.** Numerisches Steuersystem nach einem der Ansprüche 15-20 dadurch gekennzeichnet, daß der festprogrammierte Programmspeicher (9) derart ausgelegt ist, daß er eine Programmsequenz aktiviert, wenn das Servo-Richtungssignal (R) negative Richung anzeigt, wobei die Daten aus dem Zwischenspeicher (3) in umgekehrter Reihenfolge ausgelesen und geordnet werden, und die Rückwärtsfeininterpolation höchtens bis zum Startpunkt zurück ausgeführt wird.

**22.** Numerisches Steuersystem nach einem der Ansprüche 10-21, dadurch gekennzeichnet, daß für einen Prozeß mehrere Feininterpolatoren (2) vorgesehen werden, welche über das Servowegraster-Taktsignal (T) und das ServoRichtungssignal (R) miteinander synchronisiert sind.

**23.** Numerisches Steuersystem nach einem der Ansprüche 10-22, dadurch gekennzeichnet, daß mindestens ein untergeordneter Feininterpolator (12) vorgesehen ist, dessen Servowegraster-Taktsignal (T) und Servo-Richtungssignal (R) von einem steuerbaren Oszillator (13) bereitgestellt werden, wobei der Oszillator (13) über die Prozeßparameter (S,K) des übergeordneten Feininterpolators (2) gesteuert wird.

**24.** Numerisches Steuersystem nach einem der Ansprü10-23, dadurch gekennzeichnet, daß den Achsenausgängen (RX, TX, RY, TY, RZ, TZ, RC, TC) eine Schaltmatrix (14) nachgeschaltet ist, welche anhand von vom Feininterpolator ausgegebenen Prozeßparametern (S,K) die Achsenausgänge (RX, TX, RY, TY, RZ, TZ, RC, TC) den verschiedenen Antriebsachsen ($R_1$, $T_1$, $R_2$, $T_2$,....., $R_n$, $T_n$) zuordnet.

**Claims**

**1.** A numerical control system for performing a path interpolation for highly dynamic processes such as metal working or laser working by electrical discharge, having

a) a coarse interpolator (1) for emitting path elements (L, X, Y, Z, C) and process parameters (S, K) to be observed synchronously with the geometry in real time by means of their address and their new reference variable, which performs the coarse interpolation independently of the time frame, but dependently of the geometry of the path contour,

b) at least one fine interpolator (2) connected after the coarse interpolator (1), in particular via a data bus, for the fine interpolation of the path elements (L, X, Y, Z, X) together with appropriate control, whereby the fine interpolator (2) operates time independently of the coarse interpolator (1),

c) a buffer store (3) of the fine interpolator (2), which is designed for the intermediate storage of several path elements (L, X, Y, Z, C) and process parameters (S, K) emitted by the coarse interpolator (1),

whereby

d) for the exchange of data between the coarse interpolator (1) and the fine interpolator (2) no common fixed time frame is predetermined, and for this purpose

EP 0 270 059 B1

e) the control of the fine interpolator (2) is designed, independently and in real time, as a control system (4) which is time independent of the coarse interpolator (1) for performing the fine interpolation steps, the control of the buffer store (3) and the output of the process parameters (S, K).

2. A numerical control system according to Claim 1,
   **characterised in that** the coarse interpolator (1) is a programmable computer.

3. A numerical control system according to Claim 2,
   **characterised in that** the coarse interpolator (1) is a personal computer which can be programmed in a high level language.

4. A numerical control system according to one of Claims 1 to 3,
   **characterised in that** the coarse interpolator is designed for calculating with floating-point arithmetic without the use of trigonometric functions.

5. A numerical control system according to one of Claims 1 to 4,
   **characterised in that** the coarse interpolator comprises a digital single-chip floating point processor or a signal processor.

6. A numerical control system according to one of Claims 1 to 5,
   **characterised in that** the coarse interpolator (1) calculates path elements (L, X, Y, Z, X) so that for the length of a vector connecting adjacent interpolation space points (P1, P2) only such vector lengths (L) are permitted that the maximum distance of the vector from the contour to be interpolated (path error E) does not exceed a predetermined value.

7. A numerical control system according to Claim 6,
   **characterised in that** the coarse interpolator is designed so that
   a) when calculating the path elements (L, X, Y, Z, C) it only permits vector lengths (L) which in the fine interpolator (2) for no vector length produce a final error in the axial components (X, Y, Z, C), and
   b.1) it determines the permissible vector lengths (L) by means of a mathematical simulation or a test run of the fine interpolator (2) and
   b.2) it stores them in table form in the coarse interpolator (1).

8. A numerical control system according to Claim 6 or 7,
   **characterised in that** the coarse interpolator (1) is designed so that
   a) during the calculation of the path elements (L, X, Y, Z, C) it takes into consideration the rounding errors, which are produced during the quantisation required for the fine interpolator (2), for the calculation of the following path elements (L, X, Y, Z, X) and
   b) before each calculation of the path elements (L, X, Y, Z, C) it checks whether the path end point can be reached with a permissible vector length (L), and in this case it selects the last axial components (X, Y, Z, C) so that the final error becomes zero.

9. A numerical control system according to one of Claims 6 to 8,
   **characterised in that** the coarse interpolator (1) is designed so that it multiplies the calculated path elements (L, X, Y, Z, C) with a factor (N) which states how often the fine interpolator (2) interpolates one vector length (L) after another.

10. A numerical control system according to one of Claims 6 to 9,
    **characterised in that** the fine interpolator (2) contains at least one programmable frequency divider ( pulse rate multiplier (5)) with a counter (50), axial component registers (X/L, Y/L, Z/L, C/L) and an exclusive-or circuit, whereby
    a) the counter comprises:
    a.1) an input to its programming section with the determined vector length (L),
    a.2) a clock input (51) for a servo path screen timing signal (T) and
    a.3) a directional input (52) for a servo splitting signal (R) and

b) each of the axial component registers (X/L, Y/L, Z/L, C/L) comprises an input for additional directional information and an axial output (TX, TY, TZ, TC),

c) the exclusive-or circuit comprises several gates, each of which is controlled at one input by the servo splitting signal (R) and at its other input by the associated axial component register (X/L, Y/L, Z/L, C/L), and as a result determineS the directions of movement (RX, RY, RZ, RC) of the axial outputs (RX, TX, RY, TY, RZ, TZ, RC, TC).

**11.** A numerical control system according to Claim 10, **characterised in that** the time independent control system (4) comprises a priority decoder and is designed so that

    a) it only operates when

        a.1) a data word is loaded into the buffer store (3) from the coarse interpolator (1) or

        a.2) a manual command is introduced directly into the process from the coarse interpolator (1) or

        a.3) a servo path frame timing signal (T) is to be processed, and

    b) if several signals occur at the same time a priority decoder (8) determines their hierarchy.

**12.** A numerical control system according to one of Claims 1 to 11,
**characterised in that** the fine interpolator (2) comprises at least one fixed programmable sequence logical unit and/or at least one array logical unit.

**13.** A numerical control system according to Claim 12,
**characterised in that** the fine interpolator (2) is assembled from securely wired logic, in which

    a) a fixed programmed program store (9) is connected to

    b) a priority decoder (8),

    c) a status register (11),

    d) a buffer store (3),

    e) at least one programmable frequency divider (5),

    f) a process parameter output circuit (10) and

    g) a counter (7) acting as a program counter, and

    h) to the counter (7) is connected an oscillator controlled by a priority decoder (8) and comprising a start (61) and a stop input (62).

**14.** A numerical control system according to one of Claims 1 to 11,
**characterised in that** the fine interpolator (2) is a micro computer and is designed so that, according to hierarchy:

    a) it loads its algorithms, process parameters and geometry data into the buffer store (3),

    b) via the coarse interpolator (1) it introduces manually entered commands directly into the process and

    c) it finely interpolates servo path frame timing signals (T) and emits them to the axial outlets (RX, TX, RY, TY, RZ, TZ, RC, TC).

**15.** A numerical control system according to one of Claims 1 to 14,
**characterised in that** the buffer store (3) or a part thereof is a non-volatile store (e.g. battery-buffered RAM),
**and in that** all information which the system requires can be stored in the buffer store so that a process can be repeated as often as desired.

**16.** A numerical control system according to one of Claims 1 to 15,
**characterised in that** a non-volatile storage medium (e.g. diskette) is connected between the coarse interpolator (1) and the fine interpolator (2).

**17.** A numerical control system according to one of Claims 1 to 16,
**characterised in that** for the flow of data between the coarse interpolator (1) and the fine interpolator (2) a local data network (LAN) is provided.

**18.** A numerical control system according to one of Claims 1 to 17,
**characterised in that** the fine interpolator (2) is designed for the repeat of information on the system state, process state and/or geometric points reached to the coarse interpolator (1).

**19.** A numerical control system according to one of Claims 1 to 18,
**characterised in that** the buffer store (3) is designed to receive the following process parameters (S, K): geometry-dependent data on the acceleration or retardation for the servo system.

**20.** A numerical control system according to one of Claims 15 to 19,
**characterised in that** the fixed programmed program register (9) is designed to activate one of several program sequences as a function of the signals from priority decoder (8) and status register (11).

**21.** A numerical control system according to one of Claims 15 to 20,
**characterised in that** the fixed programmed program register (9) is designed so that it activates a program sequence if the servo splitting signal (R) indicates negative direction, whereby the data is read out of the buffer store (3) in reverse sequence and ordered, and reverse fine interpolation is performed at most back to the starting point.

**22.** A numerical control system according to one of Claims 10 to 21,
**characterised in that** for one process several fine interpolators (2) are provided, which are synchronised with one another via the servo path frame timing signal (T) and the servo splitting signal (R).

**23.** A numerical control system according to one of Claims 10 to 22,
**characterised in that** at least one subordinate fine interpolator (12) is provided, the servo path frame timing signal (T) and servo splitting signal (R) of which are made available by a controllable oscillator (13), whereby the oscillator (13) is controlled via the process parameters (S, K) of the higher order fine interpolator (2).

**24.** A numerical control system according to one of Claims 10 to 23,
**characterised in that** behind the axial outputs (RX, TX, RY, TY, RZ, TZ, RC, TC) is connected a switching matrix (14), which allocates the axial outputs (RX, TX, RY, TY, RZ, TZ, RC, TC) to the various driving axles ($R_1$, $T_1$, $R_2$, $T_2$, ....., $R_n$, $T_n$) by means of process parameters (S, K) emitted by the fine interpolator.

**Revendications**

**1.** Système de commande numérique pour exécuter une interpolation de trajectoire pour processus à grande dynamique tels qu'usinage de métaux par électroérosion ou usinage par laser, comportant :
a) un interpolateur approximatif pour émettre des éléments de trajectoire (L, X, Y, Z, C) et des paramètres de processus (S,K) à maintenir en mode synchrone avec la géométrie en temps réel, cela au moyen de leurs adresses et de leur nouvelle valeur de réglage, cet interpolateur approximatif exécutant l'interpolation approchée indépendamment de la trame chronologique, toutefois en fonction de la géométrie du contour-trajectoire;
b) au moins un interpolateur fin (2) monté, notamment par l'intermédiaire d'un bus de données, à la suite de l'interpolateur approximatif (1), cela pour l'interpolation fine des éléments de trajectoire (L, X, Y, Z, C), avec en outre une commande associée, ledit interpolateur fin (2) opérant dans le temps indépendamment de l'interpolateur approximatif (1);
c) une mémoire interne (3) de l'interpolateur fin (2), conçue pour la mémorisation intermédiaire de plusieurs éléments de trajectoire (L, X, Y, Z, C) et paramètres de processus (S, K) émis par l'interpolateur approximatif (1);
système dans lequel
d) aucune trame chronologique figée commune n'est fixée à l'avance pour l'échange de données entre interpolateur approximatif (1) et interpolateur fin (2), et, à cette fin,
e) la commande de l'interpolateur fin (2) est conçue en tant que système de commande (4) chronologiquement indépendant de l'interpolateur approximatif (1), celapour l'exécution des pas d'interpolation fine, de la commande de la mémoire intermédiaire (3) et de l'émission des paramètres de processus (S, K), de manière autonome et en temps réel.

**2.** Système de commande numérique selon revendication 1, caractérisé par le fait que l'interpolateur approximatif (1) est un calculateur programmable.

**3.** Système de commande numérique selon revendication 2, caractérisé par le fait que l'interpolateur approximatif (1) est un micro-ordinateur programable en un langage évolué.

**4.** Système de commande numérique selon l'une des revendications 1 à 3, caractérisé par le fait que l'interpolateur approximatif est conçu pour le calcul en arithmétique à virgule flottante, sans utilisation de fonctions trigonométriques.

**5.** Système de commande numérique selon l'une des revendications 1 à 4, caractérisé par le fait que l'interpolateur approximatif présente un processeur numérique monoplaquette, à virgule flottante, ou processeur de signaux.

**6.** Système de commande numérique selon l'une des revendications 1 à 5, caractérisé par le fait que l'interpolateur approximatif (1) calcule des éléments de trajectoire (L, X, Y, Z, C) de manière que ne soient autorisées, pour la longueur d'un vecteur reliant des points de l'espace d'interpolation voisins (P1, P2), que des longueurs (L) telles que la distance maximale du vecteur au contour à interpoler (erreur de trajectoire E) n'excède pas une valeur prédéterminée.

**7.** Système de commande numérique selon revendication 6, caractérisé par le fait que l'interpolateur approximatif est conçu de manière telle que

a) lors du calcul des éléments de trajectoire (L, X, Y, Z, C) il n'autorise que des longueurs de vecteur (L) qui, dans les l'interpolateur fin (2) n'engendrent d'erreur finale dans les composantes axiales (X, Y, Z, C) pour aucune position de vecteur, et

b.1) il élabore les longueurs de vecteur autorisées (L) à l'aide d'une simulation mathématique ou d'une marche de test de l'interpolateur fin (2), et

b.2) il stocke, sous forme de tableau(x), dans l'interpolateur approximatif (1), ces longueurs de vecteur autorisées.

**8.** Système de commande numérique selon revendication 6 ou 7, caractérisé par le fait que l'interpolateur approximatif (1) est conçu de manière telle que

a) lors du calcul des éléments de trajectoire (L, X, Y, Z, C), il prend également en compte, pour le calcul des éléments de trajectoire suivants (L, X, Y, Z, C), les erreurs d'arrondi qui surviennent lors de la quantification nécessaire pour l'interpolateur fin (2), et

b) avant chaque calcul des éléments de trajectoire (L, X, Y, Z, C), il examine si le point final de la trajectoire peut être obtenu avec une longueur de vecteur autorisée (L) et, dans ce cas, choisit les dernières composantes axiales (X, Y, Z, C) de façon que l'erreur finale soit nulle.

**9.** Système de commande numérique selon l'une des revendications 6 à 8, caractérisé par le fait que l'interpolateur approximatif (1) est conçu de manière telle qu'il multiplie les éléments de trajectoire calculés (L, X, Y, Z, C) par un facteur (N) repprésentatif de la fréquence avec laquelle l'interpolateur fin interpole séquentiellement une longueur de vecteur (L).

**10.** Système de commande numérique selon l'une des revendications 6 à 9, caractérisé par le fait que l'interpolateur fin (2) comporte au moins un diviseur de fréquence programmable (Pulse-Rate- Multiplier (5)) avec un compteur (50), des registres de composante d'axe (X/L, Y/L, Z/L, C/L), et avec un circuit OU-exclusif,

a) le compteur présentant :

a.1) une entrée pour sa programmation avec la longueur de vecteur élaborée (L),

a.2) une entrée de signal d'horloge (51) pour un servosignal (T) cadencement-trame de déplacement, et

a.3) une entrée de direction (52) pour un servosignal de direction (R), et

b) chacun des registres de composante d'axe (X/L, Y/L, Z/L, C/L) présentant une entrée pour une information supplémentaire de direction et une sortie d'axe (TX, TY, TZ, TC),

c) le circuit OU-exclusif présentant plusieurs portes, chacune étant attaquée en sa première entrée par le servosignal de direction (R) et en son autre entrée par le registre de composante d'axe respectivement associé (X/L, Y/L, Z/L, C/L), et déterminant ainsi les directions de mouvement (RX, RY, RZ, RC) des sorties d'axe (RX, TX, RY, TY, RZ, TZ, RC, TC).

16

**11.** Système de commande numérique selon revendication 10, caractérisé par le fait que le système de commande (4) chronologiquement indépendant présente un décodeur de priorité et est conçu de manière telle que

a) il ne travaille que si

a.1) l'interpolateur approximatif (1) a chargé un mot de donnée dans dans la mémoire intermédiaire (3), ou

a.2) l'interpolateur approximatif (1) a introduit une commande manuelle directement dans le processus, ou

a.3) un servosignal (T) cadencement-trame de déplacement doit être traité, et

b) en cas de présence simultanée de plusieurs signaux, un décodeur de priorité (8) détermine leur hiérarchie.

**12.** Système de commande numérique selon l'une des revendications 1 à 11, caractérisé par le fait que l'interpolateur fin (2) présente au moins un module de logique séquentielle programmable de manière fixe, et/ou au moins un module à matrice logique.

**13.** Système de commande numérique selon revendication 12, caractérisé par le fait que l'interpolateur fin (2) est constitué par de la logique câblée, avec laquelle

a) une mémoire de programme (9) programmée de manière fixe est reliée

b) à un décodeur de priorité (8),

c) à un registre d'état (11),

d) à une mémoire intermédiaire (3),

e) à au moins un diviseur de fréquence programmable (5),

f) à un circuit (10) de sortie de paramètres de processus, et

g) à un compteur (7) opérant en tant que compteur de programme, et

h) un oscillateur (6) attaqué par le décodeur de priorité (8) et présentant une entrée de démarrage (61) et une entrée d'arrêt (62) est relié au compteur (7).

**14.** Système de commande numérique selon l'une des revendications 1 à 11, caractérisé par le fait que linterpolateur fin (2) est un microcalculateur programmable et est conçu de manière telle qu'il opère selon hiérarchie :

a) le chargement de son algorithme, des paramètres de processus et des données géométriques de l'interpolateur approximatif (1) dans la mémoire intermédiaire (3),

b) l'introduction directe dans le processus des ordres introduits manuellement, via l'interpolateur approximatif (1);

c) l'interpolation fine des servosignaux (T) cadencementtrame de déplacement et la délivrance de ceux-ci aux sorties d'axe (RX, TX, RY, TY, RZ,TZ, RC, TC).

**15.** Système de commande numérique selon l'une des revendications 1 à 14, caractérisé par le fait que la mémoire intermédiaire (3), ou une partie de celle-ci, est une mémoire non volatile (par exemple RAM avec batterie-tampon), et par le fait que sont mémorisables, dans la mémoire intermédiaire, toutes informations dont le système a besoin pour répéter souvent, ad libitum, un processus.

**16.** Système de commande numérique selon l'une des revendications 1 à 15, caractérisé par le fait qu'un support de mémorisation non volatile (par exemple disquette) est monté entre l'interpolateur approximatif (1) et l'interpolateur fin (2).

**17.** Système de commande numérique selon l'une des revendications 1 à 16, caractérisé par le fait qu'un réseau local de données (LAN) est prévu pour le flux de données entre l'interpolateur approximatif (1) et l'interpolateur fin (2).

**18.** Système de commande numérique selon l'une des revendications 1 à 17, caractérisé par le fait que l'interpolateur fin (2) est conçu pour la rétrotransmission, à l'interpolateur approximatif (1), d'informations concernant l'état du système, l'état du processus et/ou concernant des points géométriques atteints

**19.** Système de commande numérique selon l'une des revendications 1 à 18, caractérisé par le fait que la mémoire intermédiaire (3) est conçue pour la réception des paramètres de processus (S, K) suivants :

17

EP 0 270 059 B1

données-fonctions géométriques concernant l'accélération ou la décélération, pour le servosystème.

**20.** Système de commande numérique selon l'une des revendications 15 à 19, caractérisé par le fait que la mémoire de programme (9) programmée de manière fixe est conçue pour activer une séquence de programme parmi plusieurs, en fonction des signaux du décodeur de priorité (8) et du registre d'état (11).

**21.** Système de commande numérique selon l'une des revendications 15 à 20, caractérisé par le fait que la mémoire de programme (9) programmée de manière fixe est conçue de manière à activer une séquence-programme lorsque le servo-signal, de direction (R) indique une direction négative, les données provenant de la mémoire intermédiaire (3) étant collectées et ordonnées dans l'ordre inverse, et l'interpolation fine dans le sens rétrograde étant rétroexécutée au plus jusqu'au point de départ.

**22.** Système de commande numérique selon l'une des revendications 10 à 21, caractérisé par le fait que plusieurs interpolateurs fins (2) sont prévus pour un processus et sont synchronisés conjointement par le servosignal (T) cadencement-trame de déplacement et par le servosignal de direction (R).

**23.** Système de commande numérique selon l'une des revendications 10 à 22, caractérisé par le fait qu'il est prévu au moins un interpolateur fin secondaire (12) dont le servosignal (T) cadencement-trame de déplacement et le servosignal de direction (R) sont fournis par un oscillateur apte à être commandé (13), lequel oscillateur (13) est commandé par les paramètres de processus (S, K) de l'interpolateur fin principal (2).

**24.** Système de commande numérique selon l'une des revendications 10 à 23, caractérisé par le fait que les sorties d'axe (RX, TX, RY, TY, RZ, TZ,RC, TC) sont suivies d'une matrice de commutation (14) qui, à l'aide de paramètres de processus (S, K) émis par l'interpolateur fin, affecte les sorties d'axe (RX, TX, RY, TY, RZ, TZ, RC, TC) aux divers axes d'entraînement ($R_1$, $T_1$, $R_2$, $T_2$,....., Rn, Tn).

18

_Fig. 1_

_Fig. 2_

Fig. 3

Fig. 4

Fig. 5

$$GO1, X', Y'$$

Fig. 6

Fig. 7

Fig. 8

Fig. 9